# EUROPEAN PATENT SPECIFICATION

(11) **EP 0 701 897 B1**
(45) Date of publication and mention of the grant of the patent: **18.04.2001**
(21) Application number: 95114095.3
(22) Date of filing: 08.09.1995
(51) Int. Cl.: B32B 27/08, B65D 65/40

(54) **Thermoplastic multilayer film for use in packaging water**
Thermoplastischer Mehrschichtfilm zum Verpacken von Wasser
Feuille thermoplastique multicouche pour emballer de l'eau

(30) Priority: 16.09.1994 EP 94114584
(43) Date of publication of application: 20.03.1996
(73) Proprietor: Cryovac, Inc., Duncan, S.C. 29334-0464 (US)
(72) Inventor: Zavadsky, Emil, CH-1867 Ollon (CH); Vietto, Paolo, I-20015 Legnano (Milan) (IT); Morandi, Gionni, I-20028 S. Vittore Olona (Milan) (IT)
(74) Representative: De Carli, Elda

(56) References cited:
- EP-A- 0 597 502
- EP-A- 0 600 425
- WO-A-93/08221
- WO-A-95/00333
- WO-A-95/21743
- US-A- 5 059 481

## Description

### FIELD OF THE INVENTION

This invention relates generally to thermoplastic films, and in particular to gas-barrier, multilayer films suitable for the packaging of water.

### BACKGROUND OF THE INVENTION

Water is currently typically packaged in rigid containers such as glass or plastic bottles or other differently shaped plastic containers such as bricks or containers having a cylindrical, conic, bi-conic, or pyramidal form. In the case of rigid plastic containers, the most commonly used resins are polyvinylchloride, and more preferably polyester e.g. polyethylene terephthalate (PET).

As a matter of fact the mouldings obtained from these resins show remarkable transparency and gloss and excellent mechanical strength which are all properties needed for this specific use; some of them also possess good gas-barrier properties.

Said resins, however, do alter the taste (odour and flavour) of the packaged water, even if not dramatically, during the few month period of storage which is generally accepted by the current distribution practice (typically 8-12 months). In other words the taint transfer from container to product during normal storage, using these types of resins, can be considered as barely acceptable, the term "taint" being here defined, according to the terminology widely accepted in this field, as "unpleasant odour or flavour imparted to food through external sources". Water is known in fact to be the most susceptible food product as far as taint is concerned since water contaminants can be perceived by the human senses at extremely low concentrations, for example parts per million (10⁶), ppm, or even parts per billion (10⁹), ppb, and taint occurrence is actually the most limiting factor as far as the choice of packaging materials is concerned.

Rigid containers, furthermore, suffer from a main, general, drawback which is related to the fact that they require huge volumes for the storage and distribution of filled containers and also huge volumes for the storage and transport of discarded containers, such as empty water containers for disposal. This is a problem particularly felt in emergency situations where big amounts of packaged water must be transported and delivered in a very short period of time. Flexible containers, such as flexible bags or pouches of thermoplastic materials, would clearly obviate these problems as it would be possible to nest such bags or pouches without leaving almost any empty volume between the packages. Furthermore, for the same amount of water to be packaged, flexible containers would require a much lower amount of starting plastic material than rigid containers and as a consequence thereof a much lower amount of plastic waste should be disposed of.

A water package consisting of a flexible thermoplastic container, filled with water and then sealed, was recently put on the market but its commercialisation was later discontinued. Its five-layer, symmetrical structure comprised a gas-barrier layer of ethylene-vinyl alcohol copolymer, two tie layers of modified polyolefin and as the abuse-resistant and the heat-sealable, contact, layers, an LDPE (a highly branched ethylene homopolymer having a density within the range of from about 0.915 to about 0.925 g/cm³ (g/cc)).

With this structure, just owing to the LDPE of the heat-sealable layer, undesirable taint of the packaged water, as evidenced by a series of analytical sensory tests carried out in our premises by a panel of sensitive assessors, occurred soon after packaging.

WO 93/02859 describes the use of VLDPEs (i.e. linear ethylene-α-olefin copolymers with a density lower than 0.915 g/cm³ (g/cc) obtained by the conventional Ziegler-Natta technology) with a heat seal initiation temperature of less than about 100°C for the manufacture of pouches for packaging of flowable materials, including liquids. The use of the specific VLDPEs is only aimed at improving the heat-sealing performances and thus avoid leakers while no reference at all is made to the taint problem.

Recently a new type of ethylene copolymers has been introduced which is the result of a new catalyst technology. Examples of introductory journal articles include "Exxon cites 'Breackthrough' in olefin polymerisation" - Modern Plastics, July 1991, p.61; "Polyolefins gain higher performance from new catalyst technologies" - Modern Plastics, Oct. 1991, p.29; and Plastics Technology, Nov. 1991, p.15.

These new resins which are produced using so-called "metallocene catalysts" essentially differ from the previously known linear polyethylenes, obtained by using conventional Ziegler-Natta polymerisation catalysts, in a much higher uniformity in chain length, average comonomer content, and comonomer incorporation along the chain. In contrast to the Ziegler-Natta polymers they are characterised as having a narrow molecular weight distribution (MWD) and a narrow compositional distribution (CD).

While the Ziegler-Natta catalysts are typically composed of metal halides activated by an organometallic co-catalyst, e.g. titanium or magnesium chlorides complexed with trialkyl aluminum, the metallocene catalysts are organometallic compounds containing one or more cyclopentadienyl ligands attached to metals, such as hafnium, titanium, vanadium, or zirconium, typically in the presence of a co-catalyst such as for instance an oligomeric methyl alumoxane. The uniqueness of these catalysts resides in the steric and electronic equivalence of each catalyst position which results in a singular activity and selectivity of the catalyst system. For this reason, metallocene catalyst systems are often referred to as "single site" owing to the homogeneous nature of them, and polymers and copolymers produced from them are often referred to as single site resins by their suppliers.

In recent years several resin suppliers have been researching metallocene catalyst technology. The following brief discussion should be viewed as representative rather than exhaustive of this active area of the patent literature.

EP-A-416,815 discloses the preparation of single-site ethylene-α-olefin copolymers using monocyclopentadienylsilane complexed to a transition metal.

US-A-4,306,041 describes the use of metallocene catalysts to produce ethylene copolymers which have narrow molecular weight distributions.

US-A-5,088,228 relates to the production of ethylene copolymers of 1-propene, 1-butene, 1-hexene, and 1-octene using metallocene catalysts.

US-A-4,935,397 discloses the production of single-site ethylene copolymers using metallocene catalysts.

US-A-5,084,534 discloses the use of bis(n-butylcyclopentadienyl)zirconium dichloride to produce high molecular weight polyethylene with specific polydispersity and density.

US-A-5,055,438 and US-A-5,057,475 disclose the use of monocyclopentadienyl catalysts having a unique silicon bridge.

JP 63/175004 employed bis(ciclopentadienyl)ethoxy-zirconium chloride for the preparation of homogeneous ethylene copolymers.

JP-B-1,101,315 discloses the use of bis(cyclopentadienyl)zirconium dichloride for the preparation of ethylene-butene copolymers.

WO 93/03093 discloses the use of single site interpolymers with a composition distribution breadth index of at least 50% in heat sealed articles and films.

WO 93/12151 describes high molecular weight linear copolymers of ethylene and a linear α-olefin having at least 10 carbon atoms obtained by this new technology.

WO 93/08221, US-A-5,272,236, and US-A-5,278,272 describe long-chain branched single-site ethylene-α-olefin co-polymers characterised by a high shear sensitivity and therefore a better processability.

Single-site ethylene-α-olefin copolymers are actually marketed by Dow (the Affinity brand) and by Exxon (under the trade-names ExactTM).

Among the improved physical properties of the single-site ethylene copolymers there may be cited better optics, improved impact-resistance, and controllable melt characteristics ("New plastic resins search for their niche" - Packaging, March 1994, p.25-26). It is also known that in the single-site copolymers the low molecular weight and the high molecular weight "tails" are greatly reduced. While the absence of high molecular weight, ethylene-rich, portions results in the improvement of the optics, reduction of the low molecular weight fractions reduce the "extractables" i.e. the shorter polymer chains that are soluble in apolar solvents such as pentane or hexane.

EP-A-597502 and EP-A-600425 describe mono- and multi-layer heat-shrinkable films containing single-site catalysed copolymers. These films are described as having improved physical properties, such as excellent optics and impact resistance.

It is the object of the present invention to provide a convenient, effective way of storing water in flexible containers, e.g. bags or pouches, made from a thermoplastic, multilayer film so as to reduce the room required for storage and the amount of plastic material to be disposed of while maintaining the taste of the packaged water unaltered for long periods of time.

Accordingly thereto, the present invention provides a gas-barrier, multilayer, film which is particularly suited for the manufacture of bags or pouches for effectively and efficiently packaging water without taint occurrence.

### SUMMARY OF THE INVENTION

In one aspect of the present invention, a thermoplastic, multilayer film suitable for water packaging comprises at least a gas-barrier layer, and a surface, heat-sealable, layer which will be the layer in contact with the packaged water and is characterised in that said surface heat-sealable layer essentially consists of a homogeneous single-site catalysed copolymer of ethylene and an α-olefin having from four to eighteen carbon atoms.

In another aspect of the present invention, a method for packaging water in a thermoplastic, flexible container is characterised by the fact that the flexible container is made from a multilayer film which comprises at least a gas-barrier layer and a surface, heat-sealable, layer which will be the layer in contact with the packaged water wherein said surface heat-sealable layer essentially consists of a homogeneous single-site catalysed copolymer of ethylene and an α-olefin having from four to eighteen carbon atoms.

In still another aspect of the present invention a flexible container, e.g. a bag or a pouch, to be used for water packaging is made from the above defined multilayer film, wherein the surface heat-sealable layer is the layer in contact with the packaged water.

### DEFINITIONS

For the purposes of the present application the term "film" is intended to refer to any flexible and flat or tubular flattened sheet of thermoplastic material having a thickness up to 250 µm (µ) typically ranging from about 50 to about 150 µm (µ) and preferably from about 75 to about 130 µm (µ). For the purposes of this application this term also includes those structures which are conventionally indicated as "laminates".

The terms "core" or "core layer" as used herein refer to an interior layer of a multilayer film having an odd number of layers. In the case of a symmetrical, palindromic film, the same number of layers is present at either side of the core layer.

The terms "surface" or "surface layers" as used herein mean a layer of a multilayer film which comprises a surface thereof.

The terms "polymer" or "polymer resin" generally include but are not limited to, homopolymers, copolymers, such as for instance, block, graft, random, and alternating copolymers, etc. as well as blends and modifications thereof.

The term "copolymer" as used herein is intended to denote polymers of two or more comonomers. Therefore, altough the present specification generally discusses ethylene-α-olefin copolymers, such term is intended to encompass copolymers of ethylene with one or more α-olefins or of ethylene with an α-olefin and another comonomer.

The term "polyolefin", as used herein, generally refers to thermoplastic polymers obtained by polymerisation or copolymerisation of relatively simple (C₂-C₁₂)olefins which may contain other comonomers wherein the olefin units are however present in higher amounts with respect to the other comonomers; including, but not limited to, homopolymers, copolymers, terpolymers, blends and modifications of such relatively simple polyolefins. Are specifically included therein homopolymers such as polyethylene and polypropylene, propylene copolymers, ethylene-α-olefin copolymers, ethylene-vinyl acetate copolymers, and ethylene-acrylate or ethylene-methacrylate copolymers.

The term "polyethylene" as used herein refers to a family of resins obtained by polymerising ethylene molecules. By varying the catalysts and the methods of polymerisation, properties such as density, melt index, crystallinity, degree of branching and molecular weight distribution can be regulated over wide ranges. Polyethylenes having densities below about 0.925 g/cm³ (g/cc) are called low density polyethylenes (LDPE), those having densities ranging from about 0.926 to about 0.940 g/cm³ (g/cc) are called medium density polyethylenes (MDPE) and those having densities ranging from about 0.941 to about 0.965 g/cm³ (g/cc) and over are called high density polyethylenes (HDPE).

The term "polypropylene" refers to a thermoplastic resin obtained by homopolymerising propylene units according to known processes.

The term "propylene copolymer" refers to a propylene copolymer with ethylene and/or 1-butene wherein the propylene units are present in a higher amounts than the ethylene and/or butene units.

The term "ethylene-α-olefin copolymer" designates a copolymer of ethylene with one or more (C₄-C₁₈)-α-olefin preferably selected from the group consisting of copolymers or terpolymers of ethylene with 1-butene, 4-methyl-1-pentene, 1-hexene, and 1-octene. Ethylene-α-olefin copolymers can be prepared using Ziegler-Natta or metallocene single site (constrained geometry) catalyst. The heterogeneous ethylene-α-olefin copolymers prepared using Ziegler-Natta catalysts are generally classified as linear low density polyethylene (LLDPE), having a density usually in the range of from about 0.915 g/cm³ (g/cc) to about 0.925 g/cm³ (g/cc), linear medium density polyethylene (LMDPE), having a density usually in the range of from about 0.926 to about 0.941 g/cm³ (g/cc), and very low density polyethylene (VLDPE), having a density lower than 0.915 g/cm³ (g/cc).

The term "ethylene-vinyl acetate copolymer" (EVA) as used herein refers to a copolymer formed from ethylene and vinyl acetate monomers wherein the ethylene derived units in the copolymer are present in major amounts and the vinyl acetate derived units in the copolymer are present in minor amounts.

As used herein the term "ethylene acrylate" or "ethylene-methacrylate copolymer" refers to the product obtained by copolymerisation of ethylene with acrylate or methacrylate monomers of formula CH₂=C(R)-CO-OX wherein R is hydrogen or methyl and X is hydrogen, (C₁-C₄)alkyl, or a metal cation preferably selected from Na⁺, Zn⁺⁺, wherein the ethylene units are present in a higher amount than the acrylate or methacrylate units.

The term "polyamide" means a high molecular weight polymer having amide linkages, and refers more specifically to synthetic polyamides, either aliphatic or aromatic, either in crystalline or amorphous form. Exemplary of synthetic polyamides are various nylons.

The term "polystyrene" generally refers to those polymers which are obtainable by polymerisation of styrene or styrene derivatives, e.g. divinylbenzene, vinyltoluene, and α-methylstyrene, or copolymerisation of the above monomers with other vinyl comonomers, e.g. butadiene, acrylonitrile, methyl acrylate, maleic anhydride, and the like comonomers, as well as to the rubber modified polystyrenes (impact-resistant polystyrenes) and to their blends.

The term "polyester", as used herein, refers to bi-oriented, heat-set, polyethylene terephthalate.

### BRIEF DESCRIPTION OF THE DRAWING

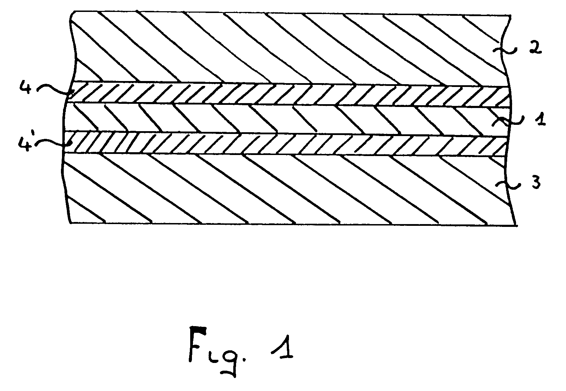

The invention may be further understood with reference to the sole drawing, Figure 1, showing a cross-section of a film according to a preferred embodiment of the present invention.

### DETAILED DESCRIPTION OF THE PREFERRED EMBODIMENTS

The present invention is directed to a thermoplastic, multilayer film suitable for use in water packaging comprising at least a gas-barrier layer, and a surface, heat-sealable, layer, said multilayer film being characterised in that said heat-sealable layer essentially consists of a homogeneous single-site catalysed copolymer of ethylene and an α-olefin having from four to eighteen carbon atoms.

With reference to Figure 1, in a preferred embodiment the multilayer film includes a gas-barrier layer **1**, and a surface, heat-sealable, layer **2**; a surface, abuse-resistant, layer **3**, and two tie layers **4** and **4'** interposed between the gas-barrier layer and the surface layers are preferably present. Additional layers may also be present if desired.

The gas-barrier layer **1** is preferably comprised of a non-chlorine containing organic polymer which is substantially impermeable to oxygen gas, i.e. an organic polymeric material which is essentially free from chlorine and has an oxygen transmission rate (tested as a 25 µm (µ) thick film) of less than about 150 cm³/m².d.bar (cc/m².day.bar) at 25 °C and 0% relative humidity (R.H.) (ASTM D-3985). Preferably it exhibits a permeability to oxygen gas of less than 100 cm³/m².d.bar (cc/m².day.bar) and more preferably less than 30 cm³/m².d.bar (cc/m².day.bar), where the permeability measurements are taken at 25°C and 0% R.H. In addition to substantial impermeability to oxygen gas, it will further be appreciated that the gas-barrier layer of the film according to the present invention also exhibits barrier properties to carbon dioxide, nitrogen and hydrogen sulfide gases, as well as to other gases and odors. Scope of this oxygen barrier layer is in fact to avoid transmission of odors and aromas from the outside environment, through the packaging material, to the packaged water.

Non limiting examples of non-chlorine containing organic polymers in accordance with the present invention include vinyl alcohol containing polymers, such as ethylene-vinyl alcohol copolymer (EVOH) and polyvinyl alcohol (PVOH), polyacrylonitrile, nylon, bi-oriented PET and the like polymers either alone or blended with each other or another polymer. Preferably, the non-chlorine containing organic polymer is ethylene-vinyl alcohol copolymer and the gas barrier layer is preferably comprised of EVOH either alone or optionally blended with a polyamide.

The gas-barrier layer **1** may also be comprised of a chlorine containing polymer substantially impermeable to oxygen. Examples of such a polymer are the vinylidene chloride copolymers (PVDC) wherein a major amount of the polymer comprises vinylidene chloride and a minor amount comprises one or more unsaturated monomers copolymerisable therewith, such as vinyl chloride, acrylonitrile, and alkyl acrylate comonomers.

The innermost surface, heat-sealable, layer **2** essentially consists of a homogeneous, single-site catalysed, copolymer of ethylene and an α-olefin having from four to eighteen carbon atoms and a density of from about 0.88 to about 0.935 g/cc, preferably of from about 0.90 to about 0.920 g/cc, or of a blend of such single-site polymers.

Preferably the α-olefin will contain from four to eight carbon atoms and even more preferably it will be selected from 1-butene, 1-hexene, 4-methyl-1-pentene, and 1-octene.

Examples of suitable single-site ethylene copolymers are Exxon's Exact 3006 (an ethylene-butene-hexene terpolymer with a density of 0.910 g/cm³ (g/cc) and M.F.I. of 1.2 g/10 min (g/10')), Exact 3016 (an ethylene-butene-hexene terpolymer having a density of 0.910 g/cm³ (g/cc) and a M.F.I. of 4.5 g/10 min (g/10')), Exact 3033 (an ethylene-butene-hexene terpolymer having a density of 0.900 g/cm³ (g/cc) and a M.F.I. of 1.2 g/10 min (g/10')), Exact 3034 (an ethylene-butene-hexene terpolymer having a density of 0.900 g/cm³ (g/cc) and a M.F.I. of 3.5 g/10 min (g/10')), Exact 3028 (an ethylene butene copolymer having a density of 0.900 g/cm³ (g/cc) and a M.F.I. of 1.2 g/10 min (g/10')), Exact 3026 (an ethylene butene copolymer having a density of 0.905 g/cm³ (g/cc) and a M.F.I. of 2.25 g/10 min (g/10')), Exact 3024 (an ethylene butene copolymer having a density of 0.905 g/cm³ (g/cc) and a M.F.I. of 4.5 g/10 min (g/10')), Exact 3001 (an ethylene butene copolymer having a density of 0.910 g/cm³ (g/cc) and a M.F.I. of 4.5 g/10 min (g/10')), Exact 3025 (an ethylene butene copolymer having a density of 0.910 g/cm³ (g/cc) and a M.F.I. of 1.2 g/10 min (g/10')), Exact 3027 (an ethylene butene copolymer having a density of 0.900 g/cm³ (g/cc) and a M.F.I. of 3.5 g/10 min (g/10')), Exact 4011 (an ethylene butene copolymer having a density of 0.888 g/cm³ (g/cc) and a M.F.I. of 2.2 g/10 min (g/10')), Exact 2010 (an ethylene hexene copolymer having a density of 0.920 g/cm³ (g/cc) and a M.F.I. of 1.5 g/10 min (g/10')), Exact 2009 (an ethylene hexene copolymer having a density of 0.922 g/cm³ (g/cc) and a M.F.I. of 3.0 g/10 min (g/10')), Dow Affinity PL1840 (an ethylene octene copolymer having a density of 0.908 g/cm³ (g/cc) and a M.F.I. of 1.0 g/10 min (g/10')), Dow Affinity PL1880 (an ethylene octene copolymer with a density of 0.902 g/cm³ (g/cc) and a M.F.I. of 1.0 g/10 min (g/10')), Dow Affinity FW1650 (an ethylene octene copolymer with a density of 0.902 g/cm³ (g/cc) and a M.F.I. of 3.0 g/10 min (g/10')), Dow Affinity FM1570 (an ethylene octene copolymer with a density of 0.915 g/cm³ (g/cc) and a M.F.I. of 1.0 g/10 min (g/10')), Dow Affinity SM1250 (an ethylene octene copolymer with density of 0.885 g/cm³ (g/cc) and a M.F.I. of 3.0 g/10 min (g/ 10')), Dow Affinity PL1845 (an ethylene octene copolymer with a density of 0.910 g/cm³ (g/cc) and a M.F.I. of 3.5 g/10 min (g/10')), Dow Affinity PF1140 (an ethylene octene copolymer having a density of 0.895 g/cm³ (g/cc) and a M.F.I. of 1.6 g/10 min (g/10')), Dow Affinity HF1030 (an ethylene octene copolymer having a density of 0.935 g/cm³ (g/cc) and a M.F.I. of 2.5 g/10 min (g/10')). All of these products are actually commercially available with the brand name indicated above.

Additional layers can be present in the multilayer film according to the present invention. As an example, a surface, abuse-resistant, layer **3** is generally present. In particular, when the gas-barrier layer comprises a vinyl alcohol containing polymer, said surface, abuse-resistant, layer must be present. The surface, abuse-resistant, layer **3**, when present, is preferably composed of a polyolefin, such as polypropylene, polyethylenes, linear polyethylenes, single-site linear polyethylenes, ethylene-vinyl acetate copolymers, etc., either alone or blended with each other or with other polymers. Alternatively, it may also be comprised of a polyamide, such as various types of nylons, or of a polystyrene.

Also, tie or adhesive layers **4** and **4'** can be present, interposed between the surface layers and the gas-barrier layer. The tie or adhesive layers serve to adhere the gas-barrier layer and the surface layers together, when the selected materials comprising those layers are not naturally compatible and therefore not able to adhere to one another after coextrusion. When tie layers are present in the multilayer film according to the invention they will be comprised of materials which provide structural integrity to the multilayered barrier structure without substantially affecting the barrier properties of the gas-barrier layer or the mechanical and physical properties of the surface layers. Non limiting examples of tie layers include functionalized polyolefins such as anhydride or/and acid modified polyolefins.

Other different layers may be present to further improve the mechanical and physical properties of the overall structure. Said additional layers may generally comprise polyolefins (typically ethylene-vinyl acetate copolymers, and polyethylenes) and polyamides (either aliphatic or aromatic polyamides).

Furthermore, and totally optionally even if not preferably, the outer surface layer, the gas-barrier layer, the optional tie layers or any other additional optional layer may also contain additives such as antistatic materials, pigments, plasticisers, ultraviolet absorbers, and the like.

The heat-sealable, surface layer, on the other hand, should not be compounded but employed in the extrusion process essentially as provided by the supplier.

In the multilayer film of the present invention the thickness of the gas-barrier layer will generally depend on its gas-barrier properties and will be determined on the basis of said properties so as to provide the overall multilayer film with an oxygen permeability, measured at 25°C and 0% R.H. of less than 100 cm³/m².d.bar (cc/m².day.bar), preferably less than 50 cm³/m².d.bar (cc/m².day.bar), and even more preferably less than 25 cm³/m².d.bar (cc/m².day.bar).

Generally, however, gas-barrier layers of from 3 to 30 µm (µ), preferably of from 4 to 16 µm (µ) and even more preferably of from 5 to 12 µm (µ) are employed.

The innermost surface, heat-sealable, layer has a thickness which is generally higher than 5 µm (µ), preferably higher than 10 µm (µ), and even more preferably higher than 15 µm (µ).

The thickness of the surface, abuse-resistant, layer, if present, is not critical and layers as thin as few microns can be suitable. It is anyway necessary, in case a moisture susceptible polymer, such as a vinyl alcohol containing polymer, is used as the gas-barrier layer, that on each side of said gas-barrier layer there is a sufficient thickness of one or more non-hydrophilic polymers which provides for a suitable moisture barrier. In the preferred five-layer structure showed in Figure 1, the tie layers are only a few microns thick (e.g. 4 to 8 µm (µ) thick) and the surface layers are each from about 25 to about 45 µm (µ) thick.

The multi-layer structures according to the present invention may be prepared by methods well known in the art. As an example they may be coextruded through a coextrusion feedblock and die assembly (either flat or annular) to yield a film of the desired thickness wherein the several layers adhere together already at the molten stage as the film exits the die. The film exiting the die can be rapidly quenched or in case of an annular die it can be "hot-blown" in order to reduce the film thickness, and then rapidly cooled down.

Alternatively said structures may be formed by extrusion coating whereby a substrate of one or more layers obtained by extrusion or coextrusion is contacted with one or more hot molten polymers as said polymers exit the die.

A further alternative method of manufacturing the films according to the invention comprises combining two or more mono- or multi-layer films prepared as described above, by the process generally referred to as "lamination", either by means of an adhesive or by the application of heat and pressure.

The multilayer films according to the present invention may optionally be subjected to an energetic radiation treatment, including but not limited to corona discharge, plasma, flame, ultraviolet, and high energy electron treatment. Irradiation with high energy electrons is typically carried out to create cross-linking in the polyolefin containing layers. Suitable radiation dosages, if applied, would be up to 20 MRad and typically within the range of from 2 to 12MRad.

Conversion of the multilayer film into bags or pouches is conventional in the art and may be performed by submitting the film, either in the form of a single or double wound flat film or in the form of a tubular film, to a series of cutting and heat-sealing steps wherein the heat-sealable layer of the film is heat-sealed to itself. Preferably, however, for the manufacture of flexible containers for water packaging, the film according to the invention is converted into pouches directly in a FFS (Form-Fill-Seal) machine. Vertical and horizontal FFS machines which could suitably be employed are currently manufactured by Onpack, Prepac, Waterline, and other equipment producers. Typically, before the "form" step, the flat film is sterilised by passing it into a hydrogen peroxide solution or under a UV lamp. Then it is dried, if necessary by a sterile air jet, formed into a pouch, typically a pillow pouch or a self-standing, gusset, pouch, by several sealing steps, either overlapping or inside-to-inside seals, filled with water and finally sealed. For hygienic reasons the overall process is carried out under sterile conditions and in a sterile environment. The flexible containers which can be manufactured with the film according to the present invention generally have a volume up to2 l (lt), preferably up to 1 l (lt).

As anticipated, the thermoplastic, multilayer film according to the present invention is particularly suited for water packaging.

Comparative sensory evaluations of water packaged in pouches made from different films, either according to the present invention or according to the closest available prior art, have been made by a panel of highly sensitive assessors. More particularly the samples which have been evaluated were five-layer structures comprising an ethylene-vinyl alcohol copolymer as the gas-barrier layer, two tie layers of modified polyolefins and two surface layers consisting of either (a) a single-site ethylene-α-olefin copolymer for the heat-sealable surface layer and an LLDPE for the abuse-resistant surface layer (a film according to the present invention), or (b) an LDPE for both surface layers (the commercialised structure) or again (c) an LLDPE for both surface layers (a comparative film). The results obtained in these tests showed that while almost no taint could be perceived with the containers obtained from the multilayer film according to the present invention wherein the heat-sealable layer is the layer in contact with water even after a prolonged storage or after storage in abuse conditions (e.g. raised temperature), the taste of water packaged in the commercialised flexible container or in the comparative film was judged unacceptable even after a short storage. These results were surprising and could not be expected on the basis of the properties known for the single-site co-polymers including their low content of "extractables", as water, unlike most foods including milk and other liquid foods, clearly has no lipophilic character and is not expected to dissolve and thus "extract" low molecular weight polyethylene chains.

The good performances of the films according to the present invention, on the other hand, might tentatively be related to the different catalyst systems employed in the preparation of the different polymers and therefore to the different trace contaminants present in the polymer resin.

A further object of the present invention is therefore a flexible, thermoplastic, container for use in water packaging made from a multilayer film comprising at least a gas-barrier layer, and a surface, heat-sealable, layer, in contact with water wherein said heat-sealable layer essentially consists of a homogeneous single-site catalysed copolymer of ethylene and an α-olefin having from four to eighteen carbon atoms.

The present invention is hereinbelow detailedly described by examples to which the invention is not limited. In the examples, unless otherwise specified, "%" is on a weight basis.

### Examples 1 to 5

The following five-layer structures are prepared either by the hot blown or the tubular cast method by coextruding the heat-sealable, surface layer made of the polymer resins indicated in Table 1 along with the following standard structure :
Tie layer of modified LLDPE (Bynel E409 by Dupont) - 5 µm (µ)
Gas-Barrier layer of EVOH (EVAL EPE105A by Kuraray) - 10 µm (µ)
Tie layer of modified LLDPE (Bynel E409 by Dupont) - 5 µm (µ)
Abuse-resistant, surface, layer of LDPE (Dow 300R) - 40 µm (µ)

**Table 1**

| Example no. | surface, heat-sealable, layer |
|---|---|
| 1 | Homogeneous single-site catalysed ethylene-butene-hexene terpolymer with a density of 0.910 g/cm³ (g/cc) and M.F.I. 1.2 g/10 min (g/10') (Exact 3006 by Exxon) - 40 µm (µ) |
| 2 | Homogeneous single-site catalysed ethylene octene copolymer with a density of 0.908 g/cm³ (g/cc) and M.F.I. 1.0 g/10 min (g/10') (Affinity PL 1840 by Dow) - 40 µm (µ) |
| 3 | Homogeneous single-site catalysed ethylene octene copolymer with a density of 0.902 g/cm³ (g/cc) and M.F.I. 1.0 g/10 min (g/10') (Affinity PL 1880 by Dow) - 40 µm (µ) |
| 4 | Homogeneous single-site catalysed ethylene octene copolymer with a density of 0.902 g/cm³ (g/cc) and M.F.I. 3.0 g/10 min (g/10') (Affinity FW 1650 by Dow) - 40 µm (µ) |
| 5 | Homogeneous single-site catalysed ethylene butene copolymer with a density of 0.910 g/cm³ (g/cc) and a M.F.I. of 1.2 g/10 min (g/10') (Exact 3025) - 40 µm (µ) |

### Comparative Examples 6 and 7

The following five-layer structures are prepared by the hot blown method by coextruding the surface heat-selable, layer made of the polymer resins indicated in Table 2 below along with the standard structure listed in the foregoing Examples :

**Table 2**

| Comparative Example no. | surface, heat-sealable, layer |
|---|---|
| 6 | Heterogeneous Ziegler-Natta catalysed ethylene octene copolymer with a density of 0.914 g/cm³ (g/cc) and M.F.I. 4.00 g/10 min (g/10') (Stamylex 09-046 F by DSM) - 40 µm (µ) |
| 7 | Heterogeneous Ziegler-Natta catalysed ethylene octene copolymer with a density of 0.919 g/cm³ (g/cc) and a M.F.I. of 4.0 g/10 min (g/10') (Stamylex 1046F by DSM) - 40 µm (µ) |

### Examples 8 to 12

The following structures are obtained by flat cast coextrusion using the Exact 3006 single-site terpolymer (35 µm (µ)) as the surface, heat-sealable, layer and coextruding it along with the following resins :
- Ex. 8: Tie layer of modified LLDPE (Bynel E409 by Dupont) - 5 µm(µ)
Gas-Barrier layer of EVOH (EVAL EPE105A by Kuraray) -10 µm (µ)
Intermediate layer of polyamide (Ultramid KR-4407F by BASF) - 12 µm (µ)
Tie layer of modified LLDPE (Bynel E409 by Dupont) - 5 µm (µ)
surface, abuse-resistant, layer of LDPE (Dow 300R) - 40 µm (µ)
- Ex. 9: Tie layer of modified LLDPE (Bynel E409 by Dupont) - 5 µm (µ).
Intermediate layer of polyamide (Ultramid KR-4407F by BASF) - 12 µm (µ)
Gas-Barrier layer of EVOH (EVAL EPE105A by Kuraray) -10 µm (µ)
Intermediate layer of polyamide (Ultramid KR-4407F by BASF) - 12 µm (µ)
Tie layer of modified LLDPE (Bynel E409 by Dupont) - 5 µm (µ)
surface, abuse-resistant, layer of LDPE (Dow 300R) - 40 µm (µ)
- Ex. 10: Tie layer of modified LLDPE (Bynel E409 by Dupont) - 5 µm (µ)
Gas-Barrier layer of EVOH (EVAL EPE105A by Kuraray) -10 µm (µ)
Intermediate layer of polyamide (Ultramid KR-4407F by BASF) - 12 µm (µ)
Tie layer of modified LLDPE (Bynel E409 by Dupont) - 5 µm (µ)
Intermediate layer of LDPE (Dow 300R) -15 µm (µ)
Tie layer of modified LLDPE (Bynel E409 by Dupont) -5 µm (µ)
surface, abuse-resistant, layer of polyamide (Ultramid KR-4407F by BASF) - 10 µm (µ)
- Ex. 11: Tie layer of modified LLDPE (Bynel E409 by Dupont) - 8 µm (µ)
Gas-Barrier layer of EVOH (EVAL EPE105A by Kuraray) -10 µm (µ)
Tie layer of modified LLDPE (Bynel E409 by Dupont) - 8 µm (µ)
surface, abuse-resistant, layer of ethylene-propylene copolymer with a high ethylene content (Hifax 7029 by Himont) - 20 µm (µ)
- Ex.12: Tie layer of modified LLDPE (Bynel E409 by Dupont) -12 µm (µ)
Gas-Barrier layer of copolyamide (Grilon CR9 by EMS) - 30 µm (µ)

### Comparative Example 13

Analysis of the film used in the commercialised pouches for water packaging showed that the multilayer structure there employed was the following one:
Innermost surface, heat-sealable, layer of LDPE - approximately 40 µm (µ)
Tie layer of modified LDPE - approximately 5 µm (µ)
Gas-barrier layer of EVOH - approximately 10 µm (µ)
Tie layer of modified LDPE - approximately 5 µm (µ)
Outermost surface, abuse-resistant, layer of LDPE - approximately 40 µm (µ)

### Sensory evaluations

The films according to the present invention have been submitted to difference tests to measure specific effects by simple discrimination. More particularly, multiple sample difference tests have been employed which are only aimed at indicating whether samples are similar or different to a known standard and provide reliable and statistically analyzable results.

For these tests small groups of pre-selected and trained judges are employed. Each panellist is served a number of samples generally up to 6 or 7 as a row of identical glasses, one of which is identified as a known standard. The unknowns may or may not include a hidden control identical to the known standard. The panellist compares each coded sample with the standard and assignes it a different score depending on the degree of difference between the known standard and the unknown test sample. In this difference intensity scale "10" indicates no difference, "8" a very slight difference, "6" a slight difference, "4" a clear difference, "2" a large difference, and "0" an extremely large difference. The average score of all panellists for each sample is then calculated. Results from panellists who rate the hidden standard as different are however discontinued.

In a group of tests the samples were kept at 38°C for 28 days before being tested, while in another group of tests they were kept at room temperature for up to 8 months. For use in these tests the films were converted into 400-ml pouches, filled with water of exactly the same source, and sealed.

In these tests the films according to the present invention received very high scores.

In representative tests, water stored at 38°C in flexible containers made from the film of Example 1 wherein the heat-sealable layer is the layer in contact with water received a mean score of 9.4 after 28 day storage, while the water stored in containers made from the films of Comparative Examples 6 and 7 and 13 was assigned a mean score of 7.2 and 8.2 respectively after 28 day storage.

The commercialized structure was tested after 7 and 42 day storage at 38°C and it was assigned a score of 1.2 and 3.4 respectively.

Very good results are also obtained with the films according to the present invention after storage at room temperature for 3.5 and for 8 months

## Claims

1. A thermoplastic, multilayer film suitable for use in water packaging comprising at least a gas-barrier layer, and a surface, heat-sealable, layer, said multilayer film being characterised in that said heat-sealable layer essentially consists of a homogeneous single-site catalysed copolymer of ethylene and an α-olefin having from four to eighteen carbon atoms.

2. A multilayer film as in claim 1 wherein the homogeneous single-site catalysed copolymer of ethylene and an α-olefin has a density of from about 0.88 to about 0.935 g/cm³ (g/cc).

3. A multilayer film as in claim 2 wherein the homogeneous single-site catalysed copolymer of ethylene and an α-olefin has a density of from 0.90 to 0.920 g/cm³ (g/cc).

4. A multilayer film as in any of the preceding claims wherein the α-olefin has from four to eight carbon atoms.

5. A multilayer film as in claim 4 wherein the α-olefin is selected from 1-butene, 4-methyl-1-pentene, 1-hexene, and 1-octene.

6. A multilayer film as in any of the preceding claims wherein the core gas-barrier layer is comprised of a non-chlorine containing organic polymer which is substantially impermeable to oxygen gas.

7. A multilayer film as in claim 6 wherein the non-chlorine containing organic polymer comprises EVOH.

8. A multilayer film as in any of the preceding claims which further comprises a surface, abuse-resistant, layer and two tie layers positioned between the gas-barrier layer and the surface layers.

9. A method of packaging water comprising filling a flexible, thermoplastic, container with water and sealing it characterised in that the flexible thermoplastic container is obtained from a multilayer film of any of the preceding claims, wherein the heat-sealable surface layer essentially consisting of a homogeneous single-site catalysed copolymer of ethylene and an α-olefin having from four to eighteen carbon atoms is the layer in contact with water.

10. A flexible, thermoplastic, container for use in water packaging characterised in that it is made of a multilayer film according to any of preceding claims 1 to 8, wherein the heat-sealable surface layer essentially consisting of a homogeneous single-site catalysed copolymer of ethylene and an α-olefin having from four to eighteen carbon atoms is the layer in contact with water.

11. A container as in claim 10 which has a volume of up to 2 l (lt).

12. A container as in claims 10 or 11 which is in the form of a self-standing pouch.

13. A hermetically sealed flexible, thermoplastic, container filled with water, characterised in that the container is made of a multilayer film of any of preceding claims 1 to 8, wherein the heat-sealable surface layer essentially consisting of a homogeneous single-site catalysed copolymer of ethylene and an α-olefin having from four to eighteen carbon atoms is the layer in contact with water.

## Patentansprüche

1. Thermoplastische Mehrschichtenfolie, die zum Verpacken von Wasser geeignet ist und mindestens eine Gasbarriereschicht und eine heißsiegelbare Oberflächenschicht umfasst, wobei die Mehrschichtenfolie dadurch gekennzeichnet ist, dass die heißsiegelbare Schicht im Wesentlichen aus homogenem single-site-katalysierten Copolymer (mit singulär aktivem Katalysator hergestellten Copolymer) aus Ethylen und α-Olefin mit vier bis achtzehn Kohlenstoffatomen besteht.

2. Mehrschichtenfolie nach Anspruch 1, bei der das homogene single-site-katalysierte Copolymer aus Ethylen und α-Olefin eine Dichte von etwa 0,88 bis etwa 0,935 g/cm³ hat.

3. Mehrschichtenfolie nach Anspruch 2, bei der das homogene single-site-katalysierte Copolymer aus Ethylen und α-Olefin eine Dichte von 0,90 bis 0,920 g/cm³ hat.

4. Mehrschichtenfolie nach einem der vorhergehenden Ansprüche, bei der das α-Olefin vier bis acht Kohlenstoffatome hat.

5. Mehrschichtenfolie nach Anspruch 4, bei der das α-Olefin ausgewählt ist aus 1-Buten, 4-Methyl-1-penten, 1-Hexen und 1-Octen.

6. Mehrschichtenfolie nach einem der vorhergehenden Ansprüche, bei der die Kern-Gasbarriereschicht aus nicht-chlorhaltigem organischen Polymer zusammengesetzt ist, das im Wesentlichen undurchlässig für Sauerstoffgas ist.

7. Mehrschichtenfolie nach Anspruch 6, bei der das nicht-chlorhaltige organische Polymer EVOH umfasst.

8. Mehrschichtenfolie nach einem der vorhergehenden Ansprüche, die ferner eine Oberflächenschutzschicht und zwei Verbindungsschichten umfasst, die zwischen der Gasbarriereschicht und den Oberflächenschichten angeordnet sind.

9. Verfahren zum Verpacken von Wasser, bei dem ein flexibler thermoplastischer Behälter mit Wasser gefüllt und versiegelt wird, dadurch gekennzeichnet, dass der flexible thermoplastische Behälter aus Mehrschichtenfolie gemäß einem der vorhergehenden Ansprüche erhalten wird, wobei die heißsiegelbare Oberflächenschicht, die im Wesentlichen aus homogenem single-site-katalysierten Copolymer aus Ethylen und α-Olefin mit vier bis achtzehn Kohlenstoffatomen besteht, diejenige Schicht in Kontakt mit Wasser ist.

10. Flexibler thermoplastischer Behälter zur Verwendung zum Verpacken von Wasser, dadurch gekennzeichnet, dass er aus einer Mehrschichtenfolie gemäß einem der Ansprüche 1 bis 8 hergestellt ist, wobei die heißsiegelbare Oberflächenschicht, die im Wesentlichen aus homogenem single-site-katalysierten Copolymer aus Ethylen und α-Olefin mit vier bis achtzehn Kohlenstoffatomen besteht, diejenige Schicht in Kontakt mit Wasser ist.

11. Behälter nach Anspruch 10, der ein Volumen bis zu 2 L hat.

12. Behälter nach Anspruch 10 oder 11, der in Form eines stehfähigen Beutels vorliegt.

13. Hermetisch versiegelter, flexibler, thermoplastischer Behälter, der mit Wasser gefüllt ist, dadurch gekennzeichnet, dass der Behälter aus einer Mehrschichtenfolie gemäß einem der Ansprüche 1 bis 8 hergestellt ist, wobei die heißsiegelbare Oberflächenschicht, die im Wesentlichen aus homogenem single-site-katalysierten Copolymer aus Ethylen und α-Olefin mit vier bis achtzehn Kohlenstoffatomen besteht, diejenige Schicht in Kontakt mit Wasser ist.

## Revendications

1. Film multicouche thermoplastique approprié à une utilisation dans l'emballage de l'eau, comprenant au moins une couche formant barrière contre les gaz et une couche de surface, thermoscellable, ledit film multicouche étant caractérisé en ce que ladite couche thermoscellable consiste essentiellement en un copolymère homogène catalysé en un seul site d'éthylène et d'une α-oléfine ayant de quatre à dix-huit atomes de carbone.

2. Film multicouche selon la revendication 1, où le copolymère homogène catalysé en un seul site d'éthylène et d'une α-oléfine a une densité d'environ 0,88 à environ 0,935 g/cm³ (g/cc).

3. Film multicouche selon la revendication 2, où le copolymère homogène catalysé en un seul site d'éthylène et d'une α-oléfine a une densité de 0,90 à 0,920 g/cm³ (g/cc),

4. Film multicouche selon l'une quelconque des revendications précédentes où la α-oléfine a de quatre à huit atomes de carbone.

5. Film multicouche selon la revendication 4, où la α-oléfine est sélectionnée parmi 1-butène, 4-méthyl-1-pentène, 1-hexène et 1-octène.

6. Film multicouche selon l'une quelconque des revendications précédentes, où la couche formant barrière contre les gaz de coeur se compose d'un polymère organique ne contenant. pas de chlore qui est sensiblement imperméable au gaz oxygène.

7. Film multicouche selon la revendication 6, où le polymère organique ne contenant pas de chlore comprend EVOH.

8. Film multicouche selon l'une quelconque des revendications précédentes qui comprend de plus une couche de surface résistant à la violation et deux couches d'attache placées entre la couche formant barrière contre les gaz et les couches de surface.

9. Méthode d'emballage d'eau consistant à remplir un conteneur flexible, thermoplastique avec de l'eau et a le sceller caractérisée en ce que le conteneur thermoplastique flexible est obtenu à partir d'un film multicouche selon toute revendication précédente, où la couche de surface thermoscellable consistant essentiellement en un copolymère homogène catalysé en un seul site d'éthylène et d'une α-oléfine ayant de quatre à dix-huit atomes de carbone est la couche en contact avec l'eau.

10. Conteneur thermoplastique flexible à utiliser dans l'emballage de l'eau, caractérisé en ce qu'il est fait d'un film multicouche selon l'une quelconque des revendications 1 à 8, où la couche de surface thermoscellable consistant essentiellement en un copolymère homogène catalysé en un seul site d'éthylène et d'une α-oléfine ayant de quatre à dix-huit atomes de carbone est la couche en contact avec l'eau.

11. Conteneur selon la revendication 10 qui a un volume pouvant atteindre 2 1.

12. Conteneur selon la revendication 10 ou 11, qui est sous la forme d'une poche autonome.

13. Conteneur thermoplastique flexible hermétiquement scellé rempli d'eau, caractérisé en ce que le conteneur est fait d'un film multicouche selon l'une quelconque des revendications 1 à 8, où la couche de surface thermoscellable, consistant essentiellement en un copolymère homogène catalysé en un seul site d'éthylène et d'une α-oléfine ayant de quatre à dix-huit atomes de carbone, est la couche en contact avec l'eau.
